# FASCICULE DE BREVET EUROPEEN

(11) **EP 2 598 559 B1**
(45) Date de publication et mention de la délivrance du brevet: **24.05.2023**
(21) Numéro de dépôt: 11752289.6
(22) Date de dépôt: 26.07.2011
(51) Int. Cl.: C08L 23/08, C08J 3/24

(54) **PROCEDE POUR PREPARER UN CABLE ET UTILISATION DE PEROXYDES ORGANIQUES POUR REDUIRE L'ETAPE DE DEGAZAGE DANS UN PROCEDE POUR PREPARER UN CABLE**
VERFAHREN ZUR HERSTELLUNG EINES KABELS UND VERWENDUNG ORGANISCHER PEROXIDE ZUR REDUZIERUNG DES ENTGASSUNGSSCHRITTS IN EINEM VERFAHREN ZUR HERSTELLUNG EINES KABELS
PROCESS FOR PREPARING A CABLE AND USE OF ORGANIC PEROXIDES FOR REDUCING THE DEGASSING STEP IN A PROCESS FOR PREPARING A CABLE

(30) Priorité: 27.07.2010 FR 1056170
(43) Date de publication de la demande: 05.06.2013
(73) Titulaire: Arkema France, 92700 Colombes (FR)
(72) Inventeur: DEFRANCISCI, Alfredo, F-69003 Lyon (FR); DEBAUD, Fabien, F-69005 Lyon (FR)
(74) Mandataire: Arkema Patent
(86) Numéro de dépôt international: PCT/FR2011/051790
(87) Numéro de publication internationale: WO 2012/022887

(56) Documents cités:
- WO-A1-2006/032765
- WO-A1-2009/103630
- US-A- 4 259 281
- US-A1- 2002 039 654
- US-A1- 2010 181 096
- DATABASE WPI Week 199519 Thomson Scientific, London, GB; AN 1995-142129 XP002629706, & JP 7 065633 A (FUJIKURA LTD) 10 mars 1995 (1995-03-10)
- DATABASE WPI Week 199923 Thomson Scientific, London, GB; AN 1999-272782 XP002629707, & JP 11 086635 A (HITACHI CABLE LTD) 30 mars 1999 (1999-03-30)

## Description

L'invention concerne un procédé pour préparer un câble ou un fil électrique en utilisant un agent générateur de radical, ainsi qu'un câble réticulé ou un fil électrique et l'utilisation de peroxydes organiques pour réduire l'étape de dégazage dans un procédé pour préparer un câble ou un fil électrique.

Il est connu l'utilisation d'agents générateurs de radical libre pour modifier un produit, tel qu'une composition de polymère via une réaction radicalaire. Des agents de radical libre sont utilisés, par exemple, pour initier (a) la réticulation dans un polymère, c'est-à-dire principalement la formation de réticulations (ponts) inter-polymères par réaction radicalaire, (b) le greffage dans un polymère, c'est-à-dire l'introduction de composés dans une chaîne de polymère (dans les chaînes de squelette et/ou latérales) par réaction radicalaire, et (c) la viscoréduction dans un polymère, c'est-à-dire la modification de l'indice de fluage (MFR) d'un polymère par réaction radicalaire. Ces modifications de polymère sont connues dans l'art.

Lorsqu'ils sont ajoutés à une composition de polymère, les agents générateurs de radical libre agissent par génération de radicaux, typiquement par décomposition en radicaux, dans des conditions, qui permettent la formation de radical. Les radicaux décomposés initient des réactions radicalaires supplémentaires dans une composition de polymère. Les produits de décomposition résultants de l'agent générateur de radical libre sont typiquement le résultat de plusieurs réactions des produits de décomposition de la réaction de formation de radical initiale. Lesdits produits de décomposition résultants restent typiquement dans le polymère modifié et peuvent comprendre des produits de décomposition néfastes indésirables.

Les peroxydes sont des agents générateurs de radical libre très courants utilisés, par exemple, dans l'industrie des polymères pour lesdites modifications de polymère. Les produits de décomposition résultants des peroxydes peuvent comprendre des sous-produits volatils. Par exemple, le dicumylperoxyde, qui est un peroxyde couramment utilisé dans le domaine des polymères, se décompose en méthane, acétophénone et alcool cumylique pendant l'étape de formation de radical, par exemple pendant une étape de réticulation. Le méthane gazeux formé (CH₄) est inflammable, explosif et volatil et constitue donc un risque dans un environnement de travail.

Dans des applications de fil électrique et de câble, un câble typique comprend au moins un conducteur entouré par une ou plusieurs couches de matériaux polymères. Dans certains câbles électriques, comprenant des câbles moyenne tension (MV), haute tension (HV) et très haute tension (EHV), ledit conducteur est entouré par plusieurs couches comprenant une couche semi-conductrice interne, une couche d'isolation et une couche semi-conductrice externe, dans cet ordre. Les câbles sont couramment produits par extrusion des couches sur un conducteur. Une ou plusieurs desdites couches sont ensuite typiquement réticulées pour améliorer la résistance à la déformation à des températures élevées, ainsi que la résistance mécanique et/ou la résistance chimique, de la/les couche(s) du câble. L'agent générateur de radical libre, tel qu'un peroxyde organique, est typiquement incorporé dans le matériau de couche avant l'extrusion de la/les couche(s) sur un conducteur. Après formation du câble stratifié, le câble est ensuite soumis à une étape de réticulation pour initier la formation de radical et ainsi la réaction de réticulation.

Les produits de décomposition de l'agent formant des radicaux libres restent principalement capturés dans la couche de câble après réticulation. Cela cause des problèmes du point de vue du procédé de fabrication de câble ainsi que du point de vue de la qualité du câble final.

En conséquence, après réticulation le câble doit être refroidi avec soin afin d'éviter que les produits de décomposition volatils gazeux tels que le méthane forment des vides dans la couche de polymère. Ces vides ont typiquement un diamètre moyen compris entre 10 et 100 µm. Des décharges partielles peuvent se produire dans de tels vides dans un câble qui est exposé à un champ électrique et réduire ainsi la résistance diélectrique du câble.

Les câbles électriques MV, HV et EHV doivent avoir une qualité de couche élevée en termes de sécurité pendant l'installation et dans l'utilisation finale de celui-ci. En service, des produits de décomposition volatils dans un câble résultant d'une étape de réticulation peuvent créer une pression de gaz et causer ainsi des défauts dans le blindage et dans les jonctions. Par exemple, lorsqu'un câble est équipé d'une barrière métallique, les produits gazeux peuvent alors exercer une pression, en particulier sur les jonctions et les terminaisons, de telle manière qu'une défaillance du système puisse se produire.

Pour les raisons ci-dessus, les produits de décomposition volatils, tels que le méthane lorsque le dicumylperoxyde est utilisé, sont conventionnellement réduits au minimum ou éliminés après l'étape de réticulation et de refroidissement. Une telle étape d'élimination est généralement connue comme étant une étape de dégazage.

L'étape de dégazage est longue et fastidieuse et est donc une opération coûteuse dans un procédé de fabrication de câble. Le dégazage requiert de grandes chambres chauffées qui doivent être correctement ventilées afin d'éviter l'accumulation, par exemple, de méthane et d'éthane inflammables. Le câble, typiquement enroulé sur des enrouleurs de câble, est normalement dégazé à une température élevée dans la plage de 50 °C à 80 °C, et de préférence de 60 °C à 70 °C, pendant de longues durées. À ces températures cependant, la dilatation et le ramollissement thermiques de l'isolation peuvent se produire et conduire à une déformation indésirable des couches de câble formées conduisant directement à des défaillances du câble. Le dégazage de câbles MV, HV et EHV avec un poids de câble élevé doit donc souvent être effectué à des températures réduites. <->

En conséquence, il existe un besoin de trouver de nouvelles solutions pour résoudre les problèmes de l'art antérieur.

Un objet de l'invention est de proposer un procédé pour produire et un procédé pour réticuler un câble, ledit procédé permettant la préparation de produits de haute qualité avec un temps de production total plus court et/ou une consommation d'énergie plus faible.

Un autre objet de l'invention est de proposer un câble réticulé comprenant une ou plusieurs couches comprenant une composition de polymère réticulée, ledit câble ayant des propriétés très avantageuses, telles qu'une qualité élevée et des propriétés supérieures d'aptitude au traitement.

L'invention et d'autres objets de celle-ci sont décrits et définis de manière détaillée ci-dessous.

Dans un premier objet, l'invention concerne un procédé pour préparer un câble réticulé, comprenant les étapes consistant à :
- appliquer sur un conducteur au moins une couche comprenant une composition de polymère, et un ou plusieurs peroxydes organiques, puis
- réticuler ladite couche pour obtenir un câble réticulé, puis
- refroidir le câble réticulé obtenu dans des conditions sous pression, et ensuite
- réduire ou éliminer la teneur en produit(s) de décomposition volatil(s) générés pendant la réticulation, à température ambiante ou élevée, où ledit procédé comprend une ou deux des caractéristiques suivantes :
   <Le document US 2010/181086 propose d' obtenir des temps de production plus courts, mais à l'aide d' autres peroxydes organiques. Les documents JP-A-7-065633 et JP-A-11-086635 décrivent l'utilisation de di-tert-butylperoxyde ou le 2,5-dimethyl-2,5-di-(tert-butylperoxy)hexane, mais n' abordentpas le problème technique de la réduction du temps de production ou de la consommation d'énergie. Le document WO 2006/032765 divulgue le 2,5-dimethyl-2,5-di- (tert-butylperoxy)hexane dans une liste de plusieurs peroxydes utilisables, en combinaison avec un nitroxyde, dans une composition pour retarder le grillage. Le document EP 2093774 concerne un procédé de préparation d'un câble dans lequel le polymère estréticulé à l' aide de peroxyde de dicumyle.>
- ladite étape de réduction ou élimination est conduite en un temps plus de 50 % plus court que la durée nécessaire pour un câble de référence qui est un câble réticulé et refroidi ayant les mêmes structure et matériau de couche dans chacune desdites une ou plusieurs couches, et préparé en utilisant les mêmes étapes de procédé et conditions de celui-ci, ainsi que le même degré de réticulation, que ledit câble réticulé et refroidi revendiqué, mais en utilisant un dicumylperoxyde en tant que peroxyde organique, pour que ledit câble de référence atteigne la même teneur desdits produit(s) de décomposition volatil(s) que ledit câble revendiqué en utilisant les mêmes conditions de réduction ou d'élimination que ledit câble revendiqué, ou
- ladite étape de réduction ou élimination est conduite à une température plus basse que la température requise pour un câble de référence qui est un câble réticulé et refroidi ayant les mêmes structure et matériau de couche dans chacune desdites une ou plusieurs couches, et préparé en utilisant les mêmes étapes de procédé et conditions de celui-ci, ainsi que le même degré de réticulation, que ledit câble réticulé et refroidi revendiqué, mais en utilisant un dicumylperoxyde en tant que peroxyde organique, pour que ledit câble de référence atteigne la même teneur dudit/desdits produit(s) de décomposition volatil(s) que ledit câble revendiqué, et
où ledit peroxyde organique est de formule (I) : 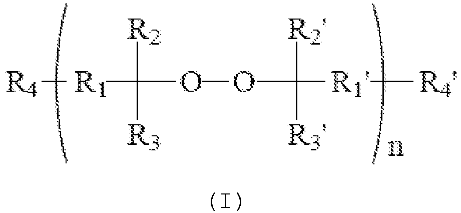 dans laquelle :
- n est un entier égal à 1, 2, 3 ou 4.
- R1, R1' sont chacun indépendamment un atome d'oxygène, une chaîne hydrocarbyle en C1-C5 linéaire ou ramifiée, saturée ou partiellement insaturée, et de préférence une chaîne alkyle en C1-C5 linéaire, non substituée,
- R2, R2', R3, R3' sont chacun indépendamment un groupe hydrocarbyle en C1-C5 linéaire ou ramifié, saturé ou partiellement insaturé, et de préférence un groupe alkyle en C1-C5 linéaire, non substitué, et
- R4, R4' sont chacun indépendamment H, un groupe hydrocarbyle en C1-C5 linéaire ou ramifié, saturé ou partiellement insaturé, et de préférence un groupe alkyle en C1-C5 linéaire, non substitué.

Ledit câble réticulé et refroidi qui est réticulé en utilisant du dicumylperoxyde et utilisé ci-dessus pour la comparaison de l'étape de réduction/élimination est présentement abrégé par « câble de référence réticulé ».

Un objet de l'invention est en outre l'utilisation d'un peroxyde organique de formule (I) ci-dessus pour réduire ou éliminer la teneur en produit(s) de décomposition volatil(s) générés pendant la réticulation.

Un objet de l'invention est en outre l'utilisation d'un peroxyde organique de formule (I) ci-dessus pour réduire ou éliminer l'étape de dégazage dans un procédé pour préparer un câble.

Une « étape de réduction ou élimination » est présentement référencée ci-dessous comme étant une étape de dégazage. Les « mêmes conditions de réaction ou d'élimination » désignent de préférence les mêmes température et ventilation. Les conditions ne sont pas critiques et dépendent du type et de la taille du câble. Il est essentiel pour lesdites comparaisons que les conditions choisies soient les mêmes. Le terme « produits de décomposition volatils » désigne des produits de décomposition formés pendant la réticulation, et éventuellement pendant l'étape de refroidissement, par initiation de l'agent générateur de radical libre comme défini et expliqué plus avant ci-dessous. Par exemple, le méthane et l'éthane sont de tels volatils. De préférence, lesdits produits de décomposition volatils sont des composés ayant un point d'ébullition à pression atmosphérique au-dessous de 50 °C, de préférence au-dessous de 80 °C plus préférablement au-dessous de 100 °C. Le(s) même(s) produit(s) de décomposition volatil(s) est/sont utilisé(s) pour la comparaison, par exemple le méthane produit. Le « degré de réticulation » peut être mesuré en utilisant une détermination de réticulation quelconque, par exemple en utilisant une détermination connue appelée détermination d'allongement permanent ou de teneur en gel.

De préférence, dans ledit procédé de réticulation de l'invention, ladite étape de réduction ou élimination est conduite en un temps plus de 70 %, de préférence plus de 90 %, plus court que l'étape de réduction ou élimination du câble de référence réticulé et refroidi comme défini ci-dessus.

Dans un mode de réalisation préférable du procédé de réticulation de l'invention ladite étape de dégazage peut être totalement évitée avec un procédé de réticulation de l'invention. Dans un autre mode de réalisation, pendant la réticulation et l'étape de refroidissement de l'invention aucun méthane détectable n'est formé lorsqu'il est mesuré comme défini ci-dessous dans « Protocole d'analyse GC » et donc le procédé de réticulation peut être conduit sans étape de dégazage. Ensuite, ladite différence de temps est naturellement de 100 % par rapport au câble de référence réticulé et refroidi.

Par conséquent, dans un autre aspect, l'invention concerne un procédé pour préparer un câble réticulé, comprenant les étapes consistant à :
(i) appliquer une ou plusieurs couches comprenant une composition de polymère sur un conducteur, où au moins une couche comprend un ou plusieurs peroxydes organiques de formule (I), (ii) réticuler par réaction radicalaire ladite au moins une couche comprenant ledit peroxyde organique, (iii) refroidir le câble réticulé obtenu dans des conditions sous pression, et (iv) utiliser le produit de l'étape (iii) en tant que câble (c'est-à-dire qu'aucune étape de dégazage n'est conduite).

Dans un autre aspect, l'invention concerne un procédé pour préparer un câble réticulé, comprenant les étapes consistant à : (i) appliquer une ou plusieurs couches comprenant une composition de polymère sur un conducteur, où au moins une couche comprend un ou plusieurs peroxydes organiques de formule (I),
(ii) réticuler par réaction radicalaire ladite au moins une couche comprenant ledit peroxyde organique, (iii) refroidir le câble réticulé obtenu dans des conditions sous pression, et
(iv) réduire ou éliminer la teneur en produit(s) de décomposition volatil(s), à température ambiante ou élevée, dudit câble réticulé obtenu par ladite étape de refroidissement.

Les conditions préférables des étapes de réticulation, refroidissement et dégazage du procédé de l'invention, ainsi que d'autres caractéristiques de l'invention et modes de réalisation, variants et sous-groupes préférés de celle-ci sont spécifiés plus avant ci-dessous.

### Peroxydes organiques selon l'invention

Les peroxydes organiques de formule (I) ci-dessus, conduisent à une teneur en méthane (CH₄) de moins de 300 ppm (en poids), de préférence de moins de 200 ppm (en poids), de préférence de moins de 100 ppm (en poids) plus préférablement de 0 à 50 ppm (en poids), en tant que produit de décomposition de ceux-ci. Généralement, dans les définitions ci-dessus et ci-dessous, les valeurs exprimées en ppm pour la teneur en méthane et/ou un autre volatil sont déterminées par chromatographie gazeuse à partir de la composition de polymère réticulée obtenue telle quelle ou à partir d'une couche de câble réticulée, suivant la définition, selon un procédé comme décrit ci-dessous dans « Protocole d'analyse GC ». En conséquence, la teneur en méthane ou un autre volatile produit peut également être déterminée à partir d'une composition de polymère réticulée telle quelle ou à partir d'un article fabriqué réticulé de celle-ci, comme souhaité, chacun étant constitué de la composition de polymère de l'invention. L'échantillon soumis à essai est réticulé en utilisant l'agent générateur de radical libre d'essai en une telle quantité qui conduit à un degré de réticulation exprimé en teneur en gel de 50 %, et de préférence une teneur en gel d'au moins 50 %. La teneur en gel (%) est mesurée selon ASTM D2765-01 Méthode A ou B (suivant la nature de l'échantillon). Un tel échantillon réticulé est ensuite utilisé pour préparer l'échantillon pour le protocole de mesure de la teneur en volatils par analyse GC.

Sans se limiter à une théorie quelconque, les termes « un/des produit(s) de décomposition de celui-ci » ou « un produit de décomposition d'un agent générateur de radical libre », etc., tels qu'utilisés ci-dessus et ci-dessous désignent présentement un/des sous-produit(s) formé(s) pendant une étape de génération de radical libre, par exemple une étape de réticulation, et éventuellement en outre pendant l'étape de refroidissement. À titre d'exemple, le méthane peut être un produit de décomposition qui est un produit de décomposition indésirable de l'invention. D'autres produits de décomposition sont spécifiés ci-dessous, qui peuvent ne pas être souhaitables dans différents modes de réalisation de l'invention.

Dans la présente spécification, le terme « peroxyde organique » a la même définition que « agent générateur de radical libre » et peut être utilisé en variante. Les peroxydes organiques de formule (I) selon l'invention conduisent à une teneur en CH₄ de moins de 300 ppm (en poids), de préférence de moins de 200 ppm (en poids), de préférence de moins de 100 ppm (en poids), plus préférablement de moins de 50 ppm (en poids), encore plus préférablement sont sans CH₄, en tant que produit de décomposition. L'absence de méthane peut être déterminée selon un procédé décrit ci-dessous dans « Protocole d'analyse GC ».

Le terme « sans CH₄ en tant que produit de décomposition » signifie que les peroxydes organiques de la présente invention ne génèrent pas de méthane, ou dans une expression variante ne se décomposent pas en sous-produit CH₄ volatil indésirable pendant une étape de formation de radical dans un procédé industriel.

La solution de l'invention concerne un nouveau principe qui est surprenant et inattendu, étant donné que dans l'art antérieur il n'existe aucune description ou aucune indication pour utiliser les peroxydes organiques de formule (I) afin d'éviter la formation de CH₄ en tant que produit de décomposition pendant l'étape de formation de radical libre dans un procédé industriel.

Par exemple, dans des applications de réticulation, l'art antérieur a proposé simplement des solutions concernant l'équilibrage entre la quantité d'agent générateur de radical libre et le degré de réticulation nécessaire.

Par conséquent, l'invention concerne en outre un procédé industriel, qui comprend une étape de formation de radicaux libres en utilisant un peroxyde organique de formule (I) adapté pour modifier un produit par réaction radicalaire, qui conduit à une teneur en CH₄ de moins de 300 ppm (en poids), de préférence de moins de 200 ppm (en poids), de préférence de moins de 100 ppm (en poids), plus préférablement de 0 à 50 ppm (en poids), encore plus préférablement est exempt de génération de CH₄, en tant que produit de décomposition. Dans un mode de réalisation, les peroxydes organiques de formule (I) conduisent à une quantité réduite de, ou de préférence ne se décomposent pas en composés de faible poids moléculaire choisis parmi des alcanes en C1-C6 et de préférence des alcanes en C1-C4 lorsqu'ils sont utilisés selon l'invention.

Ces peroxydes organiques selon l'invention ne conduisent pas à (c'est-à-dire sont sans) des produits de décomposition, de préférence des produits de décomposition hydrocarbures, ayant un point d'ébullition à pression atmosphérique de moins de 50 °C, de préférence moins de 80 °C, ou dans certains modes de réalisation même moins de 100 °C peut être souhaité. « Hydrocarbure » a la même définition que celle indiquée ci-dessous pour « hydrocarbyle » qui représente un hydrocarbure en tant que substituant monovalent. « Chaîne » représente un substituant divalent, et « groupe » représente un substituant monovalent.

De préférence, dans des peroxydes organiques de formule (I) :
- R1, R1' sont une chaîne hydrocarbyle de formule - (CH₂)- ou -(CH₂-CH₂)-,
- R2, R2', R3, R3', sont chacun indépendamment un méthyle, un éthyle, un 1-propyle, un isopropyle, un 1-butyle, un isobutyle ou un tert-butyle, de préférence un méthyle, et
- R4, R4' sont chacun indépendamment H ou un méthyle, un éthyle, un 1-propyle, un isopropyle, un 1-butyle, un isobutyle ou un tert-butyle, de préférence H.

De manière préférée entre toutes, ledit peroxyde organique de formule (I) est le 2,5-diméthyl-2,5-di-(tert-butylperoxy)hexane, le di-tertioamylperoxyde, ou le di-tert-butylperoxyde. Ces peroxydes organiques sont respectivement commercialisés par la société ARKEMA sous les noms commerciaux LUPEROX^{®} 101, LUPEROX^{®} DTA, et LUPEROX^{®} DI.

De préférence, le peroxyde organique selon l'invention est le 2,5-diméthyl-2,5-di-(tert-butylperoxy)hexane de formule (II) :

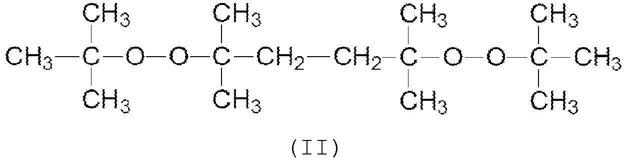

En variante, dans lesdits peroxydes organiques de formule (I) :
- n est égal à 1, et
- R4, R4' forment conjointement un fragment cyclique carbocyclique de 3 à 14 atomes C comprenant facultativement 1 à 4 hétéroatomes choisis parmi O, N, P, S ou Si. Par exemple, un tel peroxyde organique est le 3,6,9-triéthyl-3,6,9-triméthyl-1,4,7-triperoxonane de formule (III) ci-dessous :

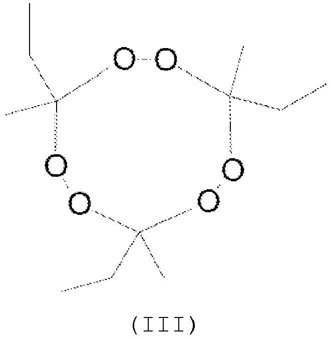

Ce produit est commercialisé par la société AKZO NOBEL sous le nom commercial TRIGONOX^{®} 301.

### Utilisations finales et applications finales de l'invention

### I. Procédé de modification des polymères 1. Réticulation de polymères

Le terme « réticulation » est connu et couramment utilisé dans le domaine des polymères et désigne la formation, principalement, de réticulations (ponts) inter-polymères par réaction radicalaire. Des polymères qui peuvent être utilisés dans le procédé de réticulation de la présente invention ne sont pas limités et peuvent être des polymères d'un type quelconque.

De préférence, ledit polymère réticulable est une polyoléfine qui peut être un homopolymère d'une oléfine ou un copolymère d'une oléfine avec un ou plusieurs comonomères.

Un groupe de polyoléfines réticulables comprend un homopolymère d'éthylène ou un copolymère d'éthylène avec un ou plusieurs comonomères, tel que 1) un homo- ou copolymère de polyéthylène ramifié produit sous haute pression par polymérisation radicalaire et appelé homo ou copolymère de polyéthylène basse densité (LDPE) ou 2) un homo- ou copolymère de polyéthylène linéaire produit par polymérisation à basse pression en utilisant un catalyseur de coordination, tel qu'un polyéthylène très basse densité linéaire, un polyéthylène basse densité linéaire (LLDPE), un polyéthylène moyenne densité (MDPE) ou un polyéthylène haute densité (HDPE), 3) des polymères de polypropylène, comprenant des homopolymères et des polymères statistiques de polypropylène et un copolymère hétérophasique de propylène, ou 4) des polymères de polybutylène, en tant qu'exemples non limitatifs.

Un groupe de polymères d'éthylène réticulables préférables est 1) un homopolymère de LDPE ou un copolymère de LDPE avec un ou plusieurs comonomères comprenant un/des comonomère(s) en C3 ou une alpha-oléfine supérieure, des comonomères polaires et des comonomères avec au moins deux doubles liaisons, tels que des comonomères de diène. La polymérisation sous haute pression est une technologie connue dans le domaine des polymères et peut être effectuée dans un réacteur tubulaire ou un réacteur d'autoclave, de préférence, dans un réacteur tubulaire.

Dans un mode de réalisation préférable, le LDPE réticulable est un copolymère d'éthylène LDPE avec un groupe polaire contenant un/des comonomère(s) et, facultativement, avec un/des autre(s) comonomère(s). À titre d'exemples de comonomères ayant des groupes polaires peuvent être mentionnés les suivants :
(a) des esters vinyliques de carboxylate, tels que l'acétate de vinyle et le pivalate de vinyle,
(b) un/des (méth)acrylates, tels que le (méth)acrylate de méthyle, le (méth)acrylate d'éthyle, le (méth)acrylate de butyle et le (méth)acrylate d'hydroxyéthyle,
(c) des acides carboxyliques insaturés, tels que l'acide (méth)acrylique, l'acide maléique et l'acide fumarique,
(d) des dérivés d'acide (méth) acrylique, tels que le (méth)acrylonitrile et l'amide (méth)acrylique, et
(e) des éthers vinyliques, tels que l'éther méthylique de vinyle et l'éther phénylique de vinyle.

Parmi ces comonomères, des esters vinyliques d'acides monocarboxyliques ayant de 1 à 4 atomes de carbone, tels que l'acétate de vinyle, et des (méth)acrylates d'alcools ayant de 1 à 4 atomes de carbone, tels que le (méth)acrylate de méthyle, sont préférés.

Des comonomères particulièrement préférés sont l'acrylate de butyle, l'acrylate d'éthyle et l'acrylate de méthyle. Encore plus préférablement, le copolymère polaire comprend un copolymère d'éthylène avec un acrylate d'alkyle en C1 à C4, tel que les acrylates de méthyle, d'éthyle, de propyle ou de butyle ou l'acétate de vinyle, ou un mélange quelconque de ceux-ci.

Les termes « acide (méth)acrylique » et « (méth) acrylate » sont destinés à couvrir à la fois l'acide acrylique et l'acide méthacrylique et, respectivement « méthacrylate » et « acrylate ».

Un autre groupe de polymères réticulables préférés sont des polymères insaturés, dans lesquels l'insaturation est produite par des doubles liaisons, de préférence des doubles liaisons carbone-carbone (C-C) . Plus préférablement, ledit polymère insaturé comprend des doubles liaisons carbone-carbone, en une quantité totale de doubles liaisons carbone-carbone/1000 atomes de carbone de 0,1 ou plus, plus préférablement de 0,2 ou plus, et de manière préférée entre toutes plus de 0,37, plus préférablement au moins 0,40. De préférence dans ce mode de réalisation la quantité totale de doubles liaisons carbone-carbone dans le polymère insaturé est d'au moins 0,5/1000 atomes de carbone. La limite supérieure de la quantité de doubles liaisons carbone-carbone présentes dans le polymère insaturé n'est pas limitée et peut de préférence être moins de 5,0/1000 atomes de carbone, de préférence moins de 3,0/1000 atomes de carbone, ou plus préférablement moins de 2,5/1000 atomes de carbone.

Un polymère insaturé désigne présentement un homopolymère, où l'insaturation est produite par un agent de transfert de chaîne, ou un copolymère, où l'insaturation est produite par polymérisation d'un monomère en présence d'au moins un comonomère polyinsaturé et facultativement en présence d'un agent de transfert de chaîne. De préférence, lesdites doubles liaisons carbone-carbone présentes dans le polymère insaturé comprennent des groupes vinyle, lesdits groupes vinyle provenant de préférence de i) un comonomère polyinsaturé, de ii) un agent de transfert de chaîne, ou de iii) un mélange quelconque de ceux-ci. Ledit comonomère polyinsaturé est de préférence un diène, de préférence un diène qui comprend au moins huit atomes de carbone, la première double liaison carbone-carbone étant terminale et la seconde double liaison carbone-carbone étant non conjuguée à la première. Des diènes préférés sont choisis parmi des diènes non conjugués en C9 à C14 ou des mélanges de ceux-ci, plus préférablement choisis parmi les 1,7-octadiène, 1,9-décadiène, 1,11- dodécadiène, 1,13-tétradécadiène, 7-méthyl-1,6-octadiène, 9-méthyl-1,8-décadiène, ou des mélanges de ceux-ci. Encore plus préférablement, le diène est choisi parmi les 1,7-octadiène, 1,9-décadiène, 1,11-dodécadiène, 1,13-tétradécadiène, ou un mélange quelconque de ceux-ci.

En plus des groupes vinyle provenant du comonomère polyinsaturé, la teneur en groupes vinyle peut également provenir, uniquement ou de façon additionnelle, d'un agent de transfert de chaîne qui introduit des groupes vinyle, tels que le propylène. Les polyoléfines insaturés préférés sont des LDPE réticulables tels que définis ci-dessus qui ont l'insaturation de double liaison C-C produite par copolymérisation d'éthylène sous haute pression conjointement avec au moins un comonomère polyinsaturé, de préférence un diène tel que défini ci-dessus, et/ou en présence d'un agent de transfert de chaîne comme défini ci-dessus. De plus, ledit LDPE réticulable adapté pour la présente invention est de préférence un copolymère LDPE qui est préparé par copolymérisation d'éthylène avec au moins un comonomère polyinsaturé, de préférence avec au moins un diène comme défini ci-dessus. De tels polymères sont connus et décrits, par exemple dans WO93/08222, EP 1695996 ou WO2006/131266. En variante, ou en plus des doubles liaisons du polymère insaturé, la composition de polymère de l'invention peut contenir des additifs, tels que des adjuvants de réticulation connus, qui apportent des doubles liaisons à la composition de polymère. Dans un tel cas, la quantité de ces doubles liaisons peut être la quantité préférable comme décrit ci-dessus pour les doubles liaisons C-C de polymère insaturé, ou si un polymère insaturé est présent, alors les quantités préférables indiquées ci-dessus de doubles liaisons C-C de polymère est de préférence la somme totale des doubles liaisons provenant du polymère insaturé et des doubles liaisons provenant de tels additifs.

De plus, des polymères linéaires d'éthylène préparés en utilisant ladite polymérisation à basse pression sont particulièrement adaptés pour la réticulation de l'invention. À titre d'exemple des polymères VLLDPE, LLDPE, MDPE et HDPE peuvent être mentionnés. Ils peuvent être produits d'une manière connue dans des procédés à une ou plusieurs étapes en utilisant un ou plusieurs parmi, par exemple, des catalyseurs Ziegler-Natta, des catalyseurs monosites, comprenant des métallocènes et non-métallocènes, et des catalyseurs à Cr. Tous lesdits catalyseurs sont particulièrement connus dans le domaine. Le procédé à plusieurs étapes comprend des combinaisons quelconques de procédés de polymérisation, tels que la polymérisation en suspension, la polymérisation en solution, la polymérisation en phase gazeuse, ou des combinaisons quelconques de ceux-ci, dans un ordre quelconque. Généralement, des polymères réticulables qui sont utilisables dans la présente invention comprennent des polymères connus quelconques, par exemple des polymères commercialisés, ou ils peuvent être préparés d'une manière connue selon ou de manière analogue au procédé de polymérisation décrit dans la littérature. Naturellement, des mélanges quelconques de polymères peuvent également être utilisés.

La quantité du peroxyde organique utilisé pour la réticulation n'est pas critique et peut varier suivant le degré de réticulation souhaité et le type et les caractéristiques du polymère réticulable. À titre d'exemple uniquement, la quantité dudit peroxyde organique de l'invention peut être inférieure à 10,0 % en poids, inférieure à 6,0 % en poids, inférieure à 5,0 % en poids, inférieure à 3,5 % en poids, par exemple entre 0,1 et 3,0 % en poids, telle que de 0,2 à 2,6 % en poids, sur la base du poids de la composition de polymère réticulable, suivant, par exemple, le poids moléculaire du peroxyde organique et le degré de réticulation souhaité.

La réticulation peut être effectuée d'une manière connue, typiquement à température élevée, telle que 140 °C ou plus, de préférence 150 °C ou plus. Ladite étape peut être effectuée dans des conditions légèrement sous pression, par exemple jusqu'à 20 bars, par exemple jusqu'à environ 13 bars, de pression. Typiquement, la température de réticulation est d'au moins 20 °C plus élevée que la température utilisée dans l'étape de mélange à chaud du matériau polymère de couche et peut être estimée par l'homme du métier.

Il a été observé que l'utilisation de la formulation de l'invention permet une diminution de la pression nécessaire pendant la réticulation, le refroidissement ou les deux. En fait, l'utilisation de la pression ambiante peut être réalisée dans l'une ou ces deux étapes et cela constitue un autre aspect de l'invention.

En conséquence, la présente invention concerne en outre l'utilisation d'un peroxyde organique de formule (I) pour réduire ou éliminer la teneur en produit(s) de décomposition volatil(s) généré(s) pendant la réticulation d'un câble, à température ambiante ou élevée, ledit peroxyde organique étant de préférence le 2,5-diméthyl-2,5-di-(tert-butylperoxy)hexane.

### II. Composition de polymère

La composition de polymère définie ci-dessous est préférable pour utilisation dans le procédé de réticulation d'un câble de l'invention comme défini ci-dessus. De plus, ladite composition de polymère en tant que telle constitue une invention indépendante.

Par conséquent, il est également décrit une composition de polymère comprenant un peroxyde organique de formule (I) comme défini ci-dessus. De préférence, la composition de polymère comprend au moins un composant de polymère et au moins un peroxyde organique de formule (I) comprenant les modes de réalisation préférés et des sous-groupes de ceux-ci, comme défini ci-dessus.

De plus, un procédé pour produire une composition de polymère est proposé, dans lequel le peroxyde organique de formule (I) est ajouté à une composition de polymère.

La quantité du peroxyde organique de l'invention peut naturellement varier suivant le procédé de modification souhaité. Des exemples des quantités sont présentés, par exemple ci-dessus dans « 1. Réticulation de polymères ». De plus, la composition de polymère de l'invention peut comprendre en outre un autre agent générateur de radical/radicaux libre(s), tel qu'un autre peroxyde organique de l'invention.

De plus, des polymères adaptés pour la composition de polymère de l'invention ne sont pas limités et comprennent par exemple les polymères 1) à 4), de préférence 1) des homo- et copolymères de LDPE, comme décrit ci-dessus dans « 1. Réticulation de polymères ». La composition de polymère de l'invention peut être sous une forme connue de poudre ou de granules, ou sous une forme de polymère en fusion. La poudre de polymère de l'invention peut, par exemple, être obtenue directement à partir du procédé de polymérisation, facultativement traitée plus avant, par exemple tamisée, et/ou facultativement traitée ou mélangée avec des composants supplémentaires.

Les granules de polymère de l'invention peuvent être produits d'une manière connue. Dans un procédé pour former les granules de l'invention, la poudre ou la matière fondue de polymère obtenue par un procédé de polymérisation, ou en variante des granules de polymère, peuvent facultativement être mélangés avec d'autres composants et granulés par exemple par extrusion dans un équipement de granulation connu. Le peroxyde organique de l'invention peut être ajouté 1) à un mélange d'une composition de polymère avant l'étape de granulation ou 2) après l'étape de granulation en ajoutant le peroxyde organique de l'invention aux granules préformés par mélange et/ou imprégnation, facultativement dans un milieu véhicule, pour obtenir les granules de polymère de l'invention.

En variante, le peroxyde organique de l'invention peut être ajouté à la poudre de polymère ou aux granules de polymère directement dans une ligne de production d'un produit final, tel qu'une ligne de production de câble. L'ajout peut être effectué dans une étape de mélange précédant l'étape de formation du produit final ou pendant l'étape de formation du produit final, par exemple l'étape d'extrusion de câble. Un tel ajout peut être effectué à la composition de polymère sous forme de poudre ou de granule ou à une matière fondue desdits poudre ou granules, cette matière fondue pouvant éventuellement contenir d'autres composants.

En conséquence, l'invention concerne une poudre de polymère, des granules de polymère ou une matière fondue de polymère comprenant une composition de polymère et un peroxyde organique de formule (I) comme défini ci-dessus.

Dans un mode de réalisation préférable des granules ou de la poudre de l'invention, lesdits granules ou poudre sont dans un emballage, tel qu'un conteneur comprenant des boîtes et des sacs. De tels conteneurs peuvent être fournis pour utilisation ultérieure. Par exemple, un producteur final, par exemple un fabricant de câble, peut ensuite utiliser les granules de l'invention tels quels dans l'étape de modification de polymère sans nécessiter l'ajout d'un agent générateur de radical libre.

De plus, la composition de polymère de l'invention peut contenir en outre d'autres composants, tels que d'autres polymères comme mentionné ci-dessus, ou des additifs, tel que des stabilisants.

Dans un mode de réalisation préférable de la composition de polymère de l'invention, ladite composition de polymère comprend en outre des additifs, tels qu'un ou plusieurs des antioxydants, stabilisants, adjuvants de fabrication, retardateurs de durcissement prématuré, adjuvants de réticulation ou retardateurs déshydratés, ou des mélanges quelconques de ceux-ci. En tant qu'antioxydant, des phénols stériquement masqués ou semi-masqués, facultativement substitués par un/des groupe(s) fonctionnel(s), des amines aromatiques, des amines stériquement masquées aliphatiques, des phosphates organiques, des composés thio, et des mélanges de ceux-ci, peuvent être mentionnés. Des adjuvants de réticulation typiques peuvent comprendre des composés ayant au moins un groupe vinyle ou allyle, par exemple le cyanurate de triallyle, l'isocyanurate de triallyle, et des di-, tri- ou tétra-acrylates. En tant qu'autres additifs, des additifs ignifugeants, des complexants d'acide, des charges, telles que le noir de charbon, et des stabilisants à la tension peuvent être mentionnés. Tous les additifs mentionnés ci-dessus sont connus dans le domaine des polymères. De telles compositions sont très utiles pour des applications de fil électrique et de câble, telles que pour les câbles de l'invention décrits ci-dessous.

L'invention concerne en outre (a) un procédé pour la réticulation d'une composition de polymère par formation de radical libre en utilisant un ou plusieurs peroxydes organiques de formule (I), où la réticulation est effectuée en produisant du méthane en tant que produit de décomposition de ladite étape de réticulation en une quantité de moins de 300 ppm (en poids), lorsqu'elle est déterminée selon un procédé comme décrit ci-dessous dans « Protocole d'analyse GC ». De préférence, ladite étape de réticulation est conduite sans produire du méthane en tant que produit de décomposition de ladite étape de réticulation. Un mode de réalisation préférable dudit procédé pour réticuler une composition de polymère par réaction radicalaire en utilisant un peroxyde organique de formule (I) conduit à une composition de polymère réticulée et produit une teneur en CH₄ de moins de 300 ppm (en poids), de préférence de moins de 200 ppm (en poids), de préférence de moins de 100 ppm (en poids), plus préférablement de 0 à 50 ppm (en poids) mesurée comme défini ci-dessous dans « Protocole d'analyse GC ».

L'invention concerne en outre indépendamment (b) un procédé pour réticuler une composition de polymère par formation de radical libre en utilisant un peroxyde organique de formule (I), de l'invention. Un procédé de réticulation préféré est le procédé (b) ci-dessus. Dans des applications finales exigeantes, il est préféré que ladite réticulation selon le procédé (b) soit conduite en utilisant un peroxyde organique qui ne produit pas de méthane (CH₄) pendant l'étape de réticulation.

De préférence, le procédé de réticulation est conduit dans des « conditions de réticulation » ce qui signifie présentement dans des conditions de décomposition d'agent à radical libre. Par exemple, une température élevée est typiquement utilisée pour accélérer la décomposition du radical et donc, l'étape de réticulation. De plus, « en l'absence de CH₄ provenant dudit peroxyde organique de formule (I) » signifie que le peroxyde organique ne produit pas de CH₄ en tant que produit de décomposition de celui-ci pendant l'étape de réticulation. L'invention concerne en outre une composition de polymère réticulée pouvant être obtenue par un procédé de réticulation de l'invention comme défini ci-dessus.

Ledit procédé de réticulation est en outre défini ci-dessus dans « 1. Réticulation de polymères ».

### III. Applications finales

### 1. Câble

Le câble défini ci-dessous est préférable pour utilisation dans un procédé de réticulation d'un câble de l'invention comme défini ci-dessus. De plus, ledit câble en tant que tel constitue une invention indépendante.

Le nouveau principe de l'invention est particulièrement réalisable dans des applications de polymères dans des fils électriques et des câbles. <il est également décrit >

En conséquence, un câble comprenant la composition de polymère de l'invention comme définie ci-dessus et ci-dessous, de préférence dans « II. Composition de polymère », présentement référencée ci-dessous en tant que « composition de polymère de l'invention ».

Dans un mode de réalisation préférable, ledit câble comprend un conducteur entouré d'une ou plusieurs couches, où au moins une couche comprend ladite composition de polymère de l'invention.

Le terme « conducteur » signifie présentement ci-dessus et ci-dessous que le conducteur comprend un ou plusieurs fils électriques. De plus, le câble peut comprendre un ou plusieurs tels conducteurs. De préférence, le conducteur est un conducteur électrique. Dans un mode de réalisation du câble de l'invention, au moins une couche est une couche d'isolation, où ladite au moins une couche d'isolation est réticulée en présence dudit peroxyde organique de formule (I).

Dans un mode de réalisation du câble de l'invention, ledit câble comprend au moins une couche semi-conductrice, où ladite au moins une couche semi-conductrice est réticulée en présence dudit peroxyde organique de formule (I).

Dans un autre mode de réalisation, le câble de l'invention comprend une couche de gainage et facultativement une ou plusieurs couches choisies parmi une couche d'isolation et une couche semi-conductrice entourées par ladite couche de gainage, où au moins ladite couche de gainage est réticulée en présence dudit peroxyde organique de formule (I).

Dans un autre mode de réalisation du câble de l'invention, un câble basse tension est proposé qui comprend une couche d'isolation et facultativement une couche de gainage, où ladite couche d'isolation comprend ladite composition de polymère de l'invention. Dans un autre mode de réalisation du câble de l'invention, un câble d'alimentation est proposé qui comprend au moins une couche semi-conductrice interne, une couche d'isolation et une couche semi-conductrice externe, dans cet ordre, facultativement entourées par une couche de gainage, où au moins une desdites couches, de préférence au moins la couche semi-conductrice interne et la couche d'isolation, comprend ladite composition de polymère de l'invention.

Dans le contexte de la présente invention, un câble basse tension est un câble fonctionnant à des tensions de 1 kV ou moins. Un câble d'alimentation est défini comme étant un câble transférant de l'énergie fonctionnant à une tension quelconque, typiquement fonctionnant à des tensions supérieures à 1 kV. La tension appliquée au câble d'alimentation peut être alternative (CA), continue (CC), ou transitoire (impulsion). Dans un mode de réalisation préféré, le câble d'alimentation préparé selon la présente invention fonctionne à des tensions supérieures à 6 kV et est appelé, par exemple, câble d'alimentation moyenne tension (MV), haute tension (HV) et très haute tension (EHV), ces termes ayant une signification bien connue et indiquent le niveau de fonctionnement d'un tel câble.

Ladite couche semi-conductrice externe dudit câble d'alimentation de l'invention peut être non pelable, c'est-à-dire fixée et non détachable, ou pelable, c'est-à-dire non fixée et détachable. Lesdits termes ont des significations connues dans le domaine des fils électriques et des câbles.

### 2. Procédé de préparation d'un câble

Le procédé de préparation d'un câble défini ci-dessous est préférable pour utilisation dans un procédé de réticulation d'un câble de l'invention comme défini ci-dessus. De plus, ledit procédé de préparation d'un câble en tant que tel constitue une invention indépendante.

Un mode de réalisation préférable du procédé pour préparer un câble de l'invention comprend des étapes d'application, de préférence par (co)extrusion, d'une ou plusieurs couches sur un conducteur, lesdites couches comprennent une composition de polymère, où au moins une couche comprend ladite composition de polymère de l'invention.

Le terme « (co)extrusion » signifie présentement que dans le cas de deux couches ou plus, lesdites couches peuvent être extrudées dans des étapes séparées, ou au moins deux ou toutes lesdites couches peuvent être coextrudées dans une même étape d'extrusion, comme il est connu dans l'art.

Dans ledit procédé de l'invention, les composants d'un matériau de couche sont mélangés dans un mélangeur séparé avant d'être introduits dans l'extrudeuse pour produire lesdites couches ou sont ajoutés directement à une extrudeuse et mélangés dans celle-ci avant formation en une couche. Des additifs et des composants supplémentaires peuvent être ajoutés pendant l'étape de mélange. Le mélange dans l'extrudeuse est soumis à une température élevée, typiquement au-dessus du point de fusion des composants polymères et ensuite (co)extrudé sur un conducteur d'une manière très bien connue dans le domaine. Par exemple, des extrudeuses et des mélangeurs conventionnels peuvent être utilisés dans le procédé de l'invention.

La poudre de polymère, les granules de polymère ou la matière fondue de l'invention décrits ci-dessus, qui comprennent ladite composition de polymère de l'invention comprenant un peroxyde organique de l'invention, peuvent chacun être également utilisés dans ledit procédé pour préparer des câbles et ils peuvent être préparés avant leur utilisation dans l'étape de préparation de câble ou ils peuvent être directement préparés dans une ligne de production de câble dans un procédé de fabrication de câble, comme décrit ci-dessus, par exemple dans « II. Composition de polymère ». En conséquence, 1) une poudre ou des granules préformés d'une composition de polymère de l'invention comprenant un peroxyde organique de l'invention, peuvent être soumis à la ligne de production de câble ; ou 2) ledit peroxyde organique de l'invention peut être ajouté conjointement avec les granules ou la poudre dans une étape de mélange avant la formation de la/les couche(s) du câble. Une telle étape de mélange peut être une étape séparée dans un dispositif de mélange séparé agencé dans la ligne de production de câble pour précéder l'étape de formation de couche de câble, par exemple une étape d'extrusion. En variante, le peroxyde organique de l'invention peut être ajouté pendant l'étape de formation de couche par exemple dans une extrudeuse, de telle manière qu'il puisse être introduit dans l'extrudeuse conjointement avec ou après l'ajout de poudre de polymère ou de granules de polymère. Le point d'ajout dans une extrudeuse n'est pas limité, par conséquent le peroxyde organique de l'invention peut être ajouté à l'entrée de l'extrudeuse ou à un point d'alimentation ultérieur agencé le long de l'extrudeuse. En conséquence, l'ajout du peroxyde organique de l'invention peut se produire lorsque le matériau polymère est dans un état solide non fondu, partiellement fondu ou fondu, c'est-à-dire un mélange fondu. Le mélange fondu obtenu d'un matériau de couche est ensuite (co)extrudé sur un conducteur pour former une couche de câble. Dans un procédé de préparation de câble préféré de l'invention, un câble basse tension ou, plus préférablement, un câble d'alimentation de l'invention comme défini ci-dessus dans 1.1. Câble est produit. Le câble obtenu peut être traité plus avant pour l'application d'utilisation finale.

Typiquement, le câble de l'invention est réticulé après la formation de couches de câble. L'invention concerne en outre un procédé pour réticuler un câble par réaction radicalaire en utilisant un ou plusieurs peroxydes organiques, comprenant l'étape consistant à : appliquer une ou plusieurs couches comprenant une composition de polymère sur un conducteur, où au moins une couche comprend un ou plusieurs peroxydes organiques de formule (I), réticuler par réaction radicalaire ladite au moins une couche comprenant le(s)dit(s) peroxyde (s) organique (s), et récupérer le câble réticulé d'une manière conventionnelle pour utilisation ultérieure ;

De préférence, dans ledit procédé, ladite réticulation est effectuée en produisant du méthane en tant que produit de décomposition de ladite étape de réticulation en une quantité de moins de 300 ppm (en poids), lorsqu'il est déterminé selon un procédé décrit ci-dessous dans « Protocole d'analyse GC », de préférence ladite étape de réticulation est conduite sans produire du méthane en tant que produit de décomposition de ladite étape de réticulation.

Dans les procédés de réticulation de l'invention ci-dessus, les conditions de réticulation peuvent varier suivant, par exemple, les matériaux utilisés et la taille du câble. La réticulation de l'invention est effectué, par exemple d'une manière connue de préférence à une température élevée. De préférence, la température la plus basse dans une couche de câble pendant l'étape de réticulation est supérieure à 140 °C, plus préférablement supérieure à 150 °C, par exemple de 160 à 210 °C. La réticulation peut être effectué dans un milieu liquide ou gazeux, par exemple dans une atmosphère de gaz inerte, tel que N₂. La pression pendant l'étape de réticulation de l'invention est typiquement de jusqu'à 20 bars, de préférence jusqu'à 13 bars, par exemple de 10 à 15 bars, dans une atmosphère inerte. Ladite étape de réticulation de l'invention est également décrite ci-dessus dans « 1. Réticulation de polymères » et ci-dessus dans « II. Composition de polymère ».

Un autre mode de réalisation préférable de procédé de réticulation de l'invention comprend une étape supplémentaire de refroidissement du câble réticulé de préférence dans des conditions sous pression dans un milieu de refroidissement par exemple dans un gaz ou un liquide, tel que N₂, de l'huile ou de l'eau. Le refroidissement est effectué dans une zone de refroidissement, qui peut facultativement être intégrée avec la zone de réticulation précédente, par exemple dans un tube de vulcanisation connu. À titre d'exemple uniquement, un tube de vulcanisation caténaire continue (CCV) peut être mentionné. La température à la couche la plus proche du conducteur est typiquement inférieure à 200 °C, par exemple de 160 à 190 °C, au début de la zone/étape de refroidissement. La pression pendant l'étape de refroidissement de l'invention est typiquement maintenue au-dessus de la pression atmosphérique, par exemple jusqu'à 20 bars, de préférence jusqu'à 13 bars, par exemple de 10 à 12 bars. Le câble est enlevé de l'étape de refroidissement sous pression, lorsque la température des couches du câble est clairement au-dessous du point de fusion du matériau polymère de couche de celui-ci. En conséquence, le câble réticulé de l'invention peut quitter l'étape de refroidissement sous pression de l'invention, par exemple lorsque la température du conducteur dudit câble est au-dessous de 110 °C suivant le matériau de polymère de couche, de préférence entre 70 et 90 °C, à la sortie de la zone de refroidissement sous pression.

L'étape de réticulation et de refroidissement est normalement effectuée dans des conditions sous pression pour prévenir la formation de vides due aux produits de décomposition volatils de, par exemple, peroxydes. Le procédé de l'invention permet donc d'éliminer le câble réticulé et refroidi de la zone de refroidissement sous pression à une température plus élevée que dans l'art antérieur, lorsqu'elle est mesurée à partir du conducteur. De préférence également, le refroidissement peut être effectué à des pressions plus faibles que dans l'art antérieur.

Facultativement, le cas échéant, le câble réticulé de l'invention peut être soumis à une étape de refroidissement non pressurisé additionnelle après ladite étape de refroidissement sous pression, pour refroidir plus avant le câble.

Le procédé de préparation de câble de l'invention comprend facultativement une autre étape de récupération du câble provenant de l'étape de refroidissement. La récupération peut être effectuée en enroulant le câble sur un enrouleur de câble d'une manière connue.

Dans un autre mode de réalisation du procédé de l'invention le câble obtenu à partir de l'étape de refroidissement et facultativement récupéré, par exemple enroulé sur un enrouleur de câble, peut facultativement être soumis, si cela est nécessaire dans certaines applications, à une étape de dégazage consécutive, par exemple, pour éliminer ou réduire les éventuels produits de décomposition volatils pouvant résulter de ladite étape de réticulation de l'invention. Dans ladite étape de dégazage, le câble de l'invention est de préférence exposé à une température ambiante ou élevée pendant une certaine durée. À titre d'exemple uniquement, ladite température de dégazage peut être, par exemple de 50 à 80 °C, et pendant une durée d'une à quatre semaines. Cependant, grâce au procédé de réticulation de l'invention, ladite étape de dégazage peut être considérablement raccourcie ou même évitée en raison d'un taux réduit desdits sous-produits volatils.

Le câble de l'invention produit par le procédé de l'invention ci-dessus peut être traité plus avant, par exemple protégé avec une couche protectrice, et/ou facultativement recouvert par une couche de gainage dans une étape de finition consécutive d'une manière connue et récupéré pour l'utilisation finale de celui-ci .

Par conséquent, de préférence, le câble réticulé et refroidi est en outre soumis à une ou plusieurs étapes facultatives choisies parmi :
- une étape de refroidissement non pressurisé, dans laquelle le câble réticulé et refroidi est refroidi plus avant dans un milieu de refroidissement,
- une étape de récupération après l'étape de refroidissement sous pression et avant l'étape de réduction ou élimination, dans laquelle le câble réticulé et refroidi est collecté, de préférence enroulé sur un enrouleur de câble, et/ou
- une étape de finition, dans laquelle le câble réticulé obtenu est fini d'une manière conventionnelle pour utilisation ultérieure.

Par conséquent, la présente invention concerne en outre un câble réticulé comprenant une composition de polymère réticulée comme défini ci-dessus, de préférence un câble basse tension ou un câble électrique réticulé, plus préférablement un câble d'alimentation réticulé, comme défini ci-dessus. De préférence ledit câble réticulé peut être obtenu par l'un quelconque des procédés de réticulation définis ci-dessus.

Les peroxydes organiques avantageux de l'invention sont de préférence des agents générateurs de radical libre qui peuvent être utilisés pour améliorer la qualité des produits, par exemple dans des procédés de production de câble. Grâce à la présente invention, la quantité de vides dans des produits en polymère, tels que des couches de câble peut être réduite ou même évitée, étant donné que moins de, voire aucun, produits de décomposition volatils sont formés, par exemple, lorsqu'un peroxyde organique de l'invention est utilisé pour modifier le polymère. De plus, l'invention permet en outre d'améliorer l'aptitude au traitement d'un câble, c'est-à-dire en vue d'un traitement plus sûr et plus rapide. Par exemple, le procédé de réticulation de l'invention peut être plus rapide et/ou plus économique, étant donné que les étapes de refroidissement et/ou de dégazage peuvent être effectuées en un temps réduit et/ou d'une manière moins consommatrice d'énergie, le cas échéant.

### Procédés de détermination

Sauf indication contraire, les procédés de détermination ci-dessous ont été utilisés pour déterminer les propriétés généralement définies dans la partie de description et dans la partie expérimentale.

### Indice de fluage

L'indice de fluage (MFR) est déterminé selon ISO 1133 et est exprimé en g/10 min. MFR est une indication de la fluidité, et donc de l'aptitude au traitement, du polymère. Plus l'indice de fluage est élevé, plus la viscosité du polymère est faible ; MFR est déterminé à 190 °C pour des polyéthylènes et peut être déterminé à différentes charges, par exemple, 2,16 kg (MFR2) ou 21,6 kg (MFR21). MFR est déterminé à 230 °C pour les polypropylènes.

### Masse volumique

La masse volumique est mesurée selon ISO 1183D. La préparation d'échantillon est exécutée selon ISO 1872-2.

### Teneur en gel

La teneur en gel a été déterminée selon ASTM D 2765-01, procédé A en utilisant un échantillon réticulé qui est constitué de la composition de polymère soumise à essai et préparé selon « Préparation des échantillons, réticulation » ci-dessous.

La teneur en gel sur un câble est évaluée en utilisant l'ASTM D 2765-01 procédé B. Les procédés A et B donnent des résultats comparables.

### Protocole d'analyse GC

Dans les définitions du peroxyde organique, des composition de polymères, des câbles et du procédé de préparation et des procédés de modification de ceux-ci comme défini ci-dessus, la teneur en volatil, par exemple CH₄, exprimée en ppm (en poids) ou comme étant « absent » est déterminée par chromatographie gazeuse (GC) à partir d'un échantillon qui est modifié, par exemple réticulé.

L'essai est utilisé pour déterminer la teneur en volatils produits, par exemple le méthane, d'un agent générateur de radical libre. L'agent générateur de radical libre d'essai est utilisé en une quantité telle qu'un degré de réticulation exprimé en teneur en gel de 50 % soit obtenu, de préférence une teneur en gel d'au moins 50 %. Les conditions de réticulation de l'échantillon ne sont pas critiques et celle-ci peut être effectuée par exemple comme décrit ci-dessous dans « Préparation des échantillons, réticulation ».

Les volatils sont mesurés en prélevant une éprouvette d'échantillon de 1 g ayant une épaisseur de 1,5 mm d'une composition modifiée, par exemple réticulée, par exemple une plaque ou un câble. Dans le cas d'un câble comprenant une/des couche(s) réticulée(s), l'éprouvette d'échantillon est prélevée à partir d'un matériau de couche d'un échantillon de câble réticulé et refroidi qui est prélevé à la sortie d'une zone de réticulation/refroidissement, par exemple à la sortie d'un tube de vulcanisation, après une étape de refroidissement sous pression d'une manière connue de l'homme du métier.

La collecte de volatils à partir de ladite éprouvette d'échantillon (dans un flacon à espace de tête, voir ci-dessous) est démarrée dans l'heure qui suit la fin de l'étape de modification, ou dans le cas d'un câble réticulé et refroidi, dans l'heure qui suit le prélèvement de l'échantillon de câble à la sortie d'une zone de réticulation/refroidissement.

Une éprouvette d'échantillon d'une épaisseur de 1,5 mm et d'un poids de 1 g est découpée au centre d'une plaque qui fait 100 mm de largeur et 100 mm de longueur. L'échantillon obtenu (spécimen) est placé dans un flacon à espace de tête de 120 ml avec un capuchon en aluminium serti avec un joint d'étanchéité et traité thermiquement à 60 °C pendant 1,5 h pour la collecte d'éventuels volatils gazeux présents dans ledit échantillon. Ensuite, 0,3 à 0,5 ml du gaz capturé dans le flacon d'échantillon est injecté dans un système de chromatographie gazeuse, dans lequel la présence et la teneur des volatils, par exemple le méthane, que l'on souhaite mesurer d'une manière connue. Les échantillons sont analysés en double et un « échantillon à blanc » sans agent générateur de radical libre/modification est utilisé en référence. L'instrument présentement utilisé est un Varian 3400 avec une colonne Al₂O₃/Na₂SO₄ de 0,53 mm x 50 m, fournie par Chrompack.

### Éprouvette de câble

Une éprouvette d'échantillon d'une épaisseur de 1,5 mm et d'un poids de 1 g est découpé dans une direction axiale à partir dudit échantillon de câble à une distance centrale (dans la direction radiale) de l'anneau de la/les couche(s)de polymère entourant le conducteur dudit échantillon de câble (c'est-à-dire à la distance du rayon Vi dudit anneau de revêtement de câble). La collecte et la détermination des volatils est effectuée comme décrit ci-dessus.

### Éprouvette de plaque

La teneur en volatil, par exemple CH₄, exprimée en ppm (en poids) ou « absent » est déterminée par chromatographie gazeuse (GC) à partir d'une plaque d'échantillon qui est modifiée, par exemple réticulée selon le protocole décrit dans la section intitulée « Préparation des échantillons, réticulation » ci-dessus. La composition d'essai contient 2 parties de peroxyde d'essai et 100 parties de polymère d'essai (c'est-à-dire suffisamment pour causer un degré de réticulation de 50 % ou plus).

Une éprouvette d'échantillon d'une épaisseur de 1,5 mm et d'un poids de 1 g est découpée au centre d'une plaque qui fait 100 mm de largeur et 100 mm de longueur. La collecte et la détermination des volatils est effectuée comme décrit ci-dessus.

### Matériaux

Dans chaque essai pour des références et pour les exemples de la présente demande, l'agencement d'essai pour le polymère de référence, c'est-à-dire le polymère sans aucun additif ajouté tel qu'un peroxyde organique, et pour les compositions soumises à essai, c'est-à-dire le polymère de référence contenant le peroxyde organique, est identique.
Polymère insaturé : le polymère est un poly(éthylène-co-1,7-octadiène)
Fabrication de poly(éthylène-co-1,7-octadiène)

De l'éthylène est comprimé dans un précompresseur à 5 étages et un hypercompresseur à 2 étages avec refroidissement intermédiaire pour atteindre une pression de réaction initiale d'environ 2950 bars. Le rendement total du compresseur est d'environ 30 tonnes/heure, dans la zone du compresseur approximativement 120 kg de propylène / heure sont ajoutés en tant qu'agent de transfert de chaîne pour maintenir un MFR de 3,2 g / 10 min. En outre, du 1,7-octadiène est ajouté au réacteur en une quantité d'environ 50 kg/h. Le mélange comprimé est chauffé à approximativement 165 °C dans une section de préchauffage d'un réacteur tubulaire à trois zones à alimentation frontale avec un diamètre interne d'environ 40 mm et une longueur totale d'environ 1200 mètres. Un mélange d'initiateurs radicalaires de peroxyde commercialisés dissous dans de l'isododécane est injecté juste après le préchauffage en une quantité suffisante pour que la réaction de polymérisation atteigne une température maximale d'environ 280 °C après quoi elle est refroidie à environ 250 °C. Les 2^{ème} et 3^{ème} températures de réaction maximales sont d'environ 280 °C et d'environ 270 °C, respectivement, avec un refroidissement intermédiaire à approximativement 250 °C. Le mélange de réaction est dépressurisé à l'aide d'une vanne de détente, refroidi et le polymère est séparé du gaz n'ayant pas réagi.

Le polymère obtenu a un nombre total de doubles liaisons de carbone C-C de 1,286/1000 C et le nombre de groupes vinyle est de 0,994 groupes vinyle/1000 C. La densité du matériau est de 920 kg/m³ et MFR (2,16 kg) = 3,2 g/10 min.

Le polymère insaturé ci-dessus peut être utilisé en testant les exemples de l'invention contenant des peroxydes organiques de formule (I) en tant qu'agent de réticulation, les exemples comparatifs avec du dicumylperoxyde en tant qu'agent de réticulation et l'exemple de référence ne contenant pas d'agent de réticulation.

Le peroxyde organique de référence commercialisé, le dicumylperoxyde, est fourni par ARKEMA.

### Préparation des échantillons, imprégnation

Les granules de polyéthylène d'essai sont broyés en poudre fine dans un broyeur Retsch avec un tamis de 1,5 mm. La poudre obtenue est imprégnée avec le peroxyde d'essai dissous dans une solution de pentane jusqu'à ce que le pentane soit évaporé pour obtenir une poudre sèche du peroxyde d'essai et le polymère d'essai. La teneur en composition d'essai est de 3 parties de peroxyde d'essai et 100 parties de polymère d'essai lorsque la teneur en gel de la composition d'essai réticulée est soumise à essai comme décrit ci-dessous. La teneur en composition d'essai est de 2 parties de peroxyde d'essai et 100 parties de polymère d'essai lorsque la teneur en volatils est déterminée comme décrit dans le protocole d'analyse GC.

### Préparation des échantillons, réticulation

Les plaques d'essai ont les dimensions et le cycle de réticulation suivants. Les plaques font 100 mm de longueur, 100 mm de largeur, et 0,1 mm d'épaisseur lorsqu'elles sont utilisées pour la détermination de la teneur en gel comme décrit ci-dessous, et 100 mm de longueur, 100 mm de largeur, et 1,5 mm d'épaisseur lorsque la teneur en volatils est déterminée comme décrit dans le protocole d'analyse GC ci-dessous. La réticulation est conduite dans une presse Specac, où la composition est maintenue à 120 °C pendant 1 min à 5 bars, puis la température est augmentée à 60 °C/ min pendant 1 min pour atteindre 180 °C à 5 bars, et maintenue à 180 °C à 5 bars pendant 12 min, suivi par le refroidissement à température ambiante en 30 min à 5 bars.

## Revendications

1. Procédé pour préparer un câble réticulé, comprenant les étapes consistant à :
- appliquer sur un conducteur au moins une couche comprenant une composition de polymère, et un ou plusieurs peroxydes organiques, puis
- réticuler ladite couche pour obtenir un câble réticulé, puis
- refroidir le câble réticulé obtenu dans des conditions sous pression, et ensuite
- réduire ou éliminer la teneur en produit(s) de décomposition volatil(s) générés pendant la réticulation, à température ambiante ou élevée, où
ledit procédé comprend une ou deux des caractéristiques suivantes :
- ladite étape de réduction ou élimination est conduite en un temps plus de 50 % plus court que la durée nécessaire pour un câble de référence qui est un câble réticulé et refroidi ayant les mêmes structure et matériau de couche dans chacune desdites une ou plusieurs couches, et préparé en utilisant les mêmes étapes de procédé et conditions de celui-ci, ainsi que le même degré de réticulation, que ledit câble réticulé et refroidi revendiqué, mais en utilisant un dicumylperoxyde en tant que peroxyde organique, pour que ledit câble de référence atteigne la même teneur desdits produit (s) de décomposition volatil (s) que ledit câble revendiqué en utilisant les mêmes conditions de réduction ou d'élimination que ledit câble revendiqué, ou
- ladite étape de réduction ou élimination est conduite à une température plus basse que la température requise pour un câble de référence qui est un câble réticulé et refroidi ayant les mêmes structure et matériau de couche dans chacune desdites une ou plusieurs couches, et préparé en utilisant les mêmes étapes de procédé et conditions de celui-ci, ainsi que le même degré de réticulation, que ledit câble réticulé et refroidi revendiqué, mais en utilisant un dicumylperoxyde en tant que peroxyde organique, pour que ledit câble de référence atteigne la même teneur dudit/desdits produit (s) de décomposition volatil (s) que ledit câble revendiqué, et
où ledit peroxyde organique est de formule (I) : 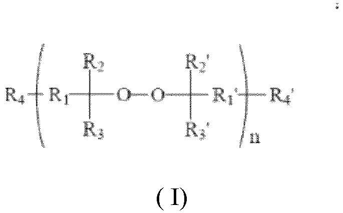 dans laquelle :
- n est un entier égal à 1, 2, 3 ou 4.
- Rl, Rl' sont chacun indépendamment un atome d'oxygène, une chaîne hydrocarbyle en Cl-C5 linéaire ou ramifiée, saturée ou partiellement insaturée, et de préférence une chaîne alkyle en Cl-C5 linéaire, substituée,
- R2, R2', R3, R3' sont chacun indépendamment un groupe hydrocarbyle en Cl-C5 linéaire ou ramifié, saturé ou partiellement insaturé, et de préférence un groupe alkyle en Cl-C5 linéaire, non substitué, et
- R4, R4' sont chacun indépendamment H, un groupe hydrocarbyle en Cl-C5 linéaire ou ramifié, saturé ou partiellement instauré, et de préférence un groupe alkyle en Cl-C5 linéaire, non substitué.

2. Procédé selon la revendication 1 **caractérisé en ce que** dans ledit peroxyde organique :
- Rl, Rl' sont une chaîne hydrocarbyle de formule
(CH2) - ou - (CH2-CH2) -,
- R2, R2' , R3, R3' , sont chacun indépendamment un méthyle, un éthyle, un 1-propyle, un isopropyle, un 1-butyle, un isobutyle ou un tert-butyle, de préférence un méthyle, et
- R4, R4' sont chacun indépendamment H ou un méthyle, un éthyle, un 1-propyle, un isopropyle, un 1-butyle, un isobutyle ou un tert-butyle, de préférence H.

3. Procédé selon la revendication 1 **caractérisé en ce que** ledit peroxyde organique est le 2, 5-diméthyl-2, 5-di-(tert-butylperoxy) hexane, le di-tertioamylperoxyde, ou le di-tert-butylperoxyde, de préférence le 2,5-diméthyl-2,5-di-(tert-butylperoxy)hexane.

4. Procédé selon la revendication 1 **caractérisé en ce que** dans ledit peroxyde organique :
- n est égal à 1, et
- R4, R4', forment conjointement un fragment cyclique carbocyclique de 3 à 14 atomes C comprenant facultativement 1 à 4 hétéroatomes choisis parmi 0, N, P, S ou Si.

5. Procédé selon la revendication 4 **caractérisé en ce que** ledit peroxyde organique est le 3,6,9-triéthyl-3,6,9-triméthyl-1,4,7-triperoxonane.

6. Procédé comme défini dans l'une quelconque des revendications précédentes, **caractérisé en ce que** ladite étape de réduction ou d'élimination est conduite en un temps plus de 70 %, de préférence plus de 90 %, plus court que l'étape de réduction ou élimination du câble de référence réticulé et refroidi comme défini dans la revendication 1.

7. Procédé de l'une quelconque des revendications précédentes, **caractérisé en ce que** le câble réticulé et refroidi est en outre soumis à une ou plusieurs étapes choisies parmi :
- une étape de refroidissement non pressurisé, dans laquelle le câble réticulé et refroidi est en outre refroidi dans un milieu de refroidissement,
- une étape de récupération après l'étape de refroidissement sous pression et avant l'étape de réduction ou élimination, dans laquelle le câble réticulé et refroidi est collecté, de préférence enroulé autour d'un enrouleur de câble, et/ou
- une étape de finition, dans laquelle le câble réticulé obtenu est fini d'une façon conventionnelle pour utilisation ultérieure.

8. Procédé comme défini dans l'une quelconque des revendications précédentes pour préparer un câble réticulé qui comprend au moins une couche d'isolation, **caractérisé en ce que** ladite au moins une couche d'isolation est réticulée en présence dudit peroxyde organique de formule (I).

9. Procédé comme défini dans l'une quelconque des revendications précédentes pour préparer un câble réticulé qui comprend au moins une couche semi-conductrice, **caractérisé en ce que** ladite au moins une couche semi-conductrice est réticulée en présence dudit peroxyde organique de formule (I).

10. Procédé comme défini dans l'une quelconque des revendications précédentes pour préparer un câble réticulé qui comprend une couche de gainage et facultativement une ou plusieurs couches choisies parmi une couche d'isolation et une couche semi-conductrice entourées par ladite couche de gainage, **caractérisé en ce qu'**au moins ladite couche de gainage est réticulée en présence dudit peroxyde organique de formule (I).

11. Utilisation d'un peroxyde organique de formule (I) comme défini dans la revendication 1 pour réduire ou éliminer la teneur en produit(s) de décomposition volatil(s) générés pendant la réticulation d'un câble, à température ambiante ou élevée.

12. Utilisation d'un peroxyde organique de formule (I) selon la revendication 11, **caractérisée en ce que** ledit peroxyde organique est le 2, 5-diméthyl-2, 5-di-(tert-butylperoxy) hexane.

## Patentansprüche

1. Verfahren zur Herstellung eines vernetzten Kabels, wobei es die folgenden Schritte umfasst:
- Aufbringen mindestens einer Schicht, die eine Polymerzusammensetzung sowie ein oder mehrere organische Peroxide umfasst, auf einen Leiter, und anschließend
- Vernetzen dieser Schicht, um ein vernetztes Kabel zu erhalten, und anschließend
- Abkühlen des erhaltenen vernetzten Kabels unter Druckeinwirkungsbedingungen, und danach
- Verringern oder Beseitigen des Gehalts an flüchtigen Zersetzungsprodukten, die bei der Vernetzung entstehen, bei Raumtemperatur oder erhöhter Temperatur, wobei
das Verfahren ein oder zwei der folgenden Merkmale umfasst:
- der Schritt des Verringerns oder Beseitigens erfolgt innerhalb eines Zeitraums, der um mehr als 50 % kürzer als die Dauer ist, welche für ein Referenzkabel benötigt wird, bei dem es sich um ein vernetztes und abgekühltes Kabel handelt, welches in jeder der einen oder mehreren Schichten dieselbe Schichtstruktur und - materialbeschaffenheit hat, wobei es unter Anwendung derselben Verfahrensschritte und Bedingungen wie dieses sowie mit demselben Vernetzungsgrad wie das beanspruchte vernetzte und abgekühlte Kabel hergestellt wurde, wobei als organisches Peroxid jedoch Dicumylperoxid verwendet wurde, damit das Referenzkabel denselben Gehalt an flüchtigen Zersetzungsprodukten wie das beanspruchte Kabel erreicht, wenn dieselben Bedingungen der Verringerung oder Beseitigung wie beim beanspruchten Kabel zur Anwendung kommen, oder
- der Schritt des Verringerns oder Beseitigens erfolgt bei einer Temperatur, welche niedriger als die Temperatur ist, wie sie für ein Referenzkabel erforderlich ist, bei dem es sich um ein vernetztes und abgekühltes Kabel handelt, welches in jeder der einen oder mehreren Schichten dieselbe Schichtstruktur und - materialbeschaffenheit hat, wobei es unter Anwendung derselben Verfahrensschritte und Bedingungen wie dieses sowie mit demselben Vernetzungsgrad wie das beanspruchte vernetzte und abgekühlte Kabel hergestellt wurde, wobei als organisches Peroxid jedoch Dicumylperoxid verwendet wurde, damit das Referenzkabel denselben Gehalt an flüchtigen Zersetzungsprodukten wie das beanspruchte Kabel erreicht, und
wobei das organische Peroxid der Formel (I) entspricht: 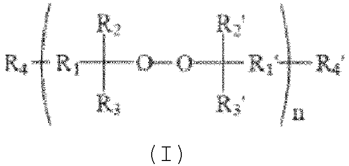 in welcher:
- n eine ganze Zahl ist, die gleich 1, 2, 3 oder 4 ist,
- R1, R1' jeweils auf unabhängige Weise für ein Sauerstoffatom, eine geradkettige oder verzweigte C1-C5-Kohlenwasserstoffkette gesättigter oder teilweise ungesättigter Art stehen, wobei es sich vorzugsweise um eine geradkettige substituierte C1-C5-Alkylkette handelt,
- R2, R2', R3, R3' jeweils auf unabhängige Weise eine geradkettige oder verzweigte C1-C5-Kohlenwasserstoffkette gesättigter oder teilweise ungesättigter Art stehen, wobei es sich vorzugsweise um eine geradkettige unsubstituierte C1-C5-Alkylkette handelt, und
- R4, R4' jeweils auf unabhängige Weise für H, eine geradkettige oder verzweigte C1-C5-Kohlenwasserstoffkette gesättigter oder teilweise ungesättigter Art stehen, wobei es sich vorzugsweise um eine geradkettige unsubstituierte C1-C5-Alkylkette handelt.

2. Verfahren nach Anspruch 1, **dadurch gekennzeichnet, dass** in dem organischen Peroxid:
- R1, R1' für eine Kohlenwasserstoffkette der folgenden Formel stehen
(CH2) - oder - (CH2-CH2)
- R2, R2', R3, R3' jeweils auf unabhängige Weise für ein Methyl, ein Ethyl, ein 1-Propyl, ein Isopropyl, ein 1-Butyl, ein Isobutyl oder ein tert.-Butyl, vorzugsweise ein Methyl, stehen, und
- R4, R4' jeweils auf unabhängige Weise für H oder ein Methyl, ein Ethyl, ein 1-Propyl, ein Isopropyl, ein 1-Butyl, ein Isobutyl oder ein tert.-Butyl, vorzugsweise H, stehen.

3. Verfahren nach Anspruch 1, **dadurch gekennzeichnet, dass** es sich bei dem organischen Peroxid um 2,5-Dimethyl-2,5-di-(tert.-butylperoxy)hexan, di-tert.-Amylperoxid, oder di-tert.-Butylperoxid, vorzugsweise um 2,5-Dimethyl-2,5-di-(tert.-butylperoxy)hexan, handelt.

4. Verfahren nach Anspruch 1, **dadurch gekennzeichnet, dass** in dem organischen Peroxid:
- n gleich 1 ist, und
- R4, R4' gemeinsam ein carbozyklisches Ringfragment mit 3 bis 14 C-Atomen bilden, welches möglicherweise 1 bis 4 Heteroatome umfasst, die aus O, N, P, S, oder Si ausgewählt sind.

5. Verfahren nach Anspruch 4, **dadurch gekennzeichnet, dass** es sich bei dem organischen Peroxid um 3,6,9-triethyl-3,6,9-trimethyl-1,4,7-triperoxonan handelt.

6. Verfahren gemäß der Begriffsbestimmung in einem beliebigen der vorhergehenden Ansprüche, **dadurch gekennzeichnet, dass** der Schritt des Verringerns oder Beseitigens innerhalb eines Zeitraums durchgeführt wird, welcher um mehr als 70 %, vorzugsweise um mehr als 90 % kürzer als der Schritt des Verringerns oder Beseitigens beim vernetzten und abgekühlten Referenzkabel gemäß der Begriffsbestimmung im Anspruch 1 ist.

7. Verfahren nach einem beliebigen der vorhergehenden Ansprüche, **dadurch gekennzeichnet, dass** das vernetzte und abgekühlte Kabel darüber hinaus einem oder mehreren Schritten unterzogen wird, die aus den folgenden ausgewählt sind:
- einem Schritt des Abkühlens ohne Druckeinwirkung, wobei das vernetzte und abgekühlte Kabel darüber hinaus in einem Kühlmedium abgekühlt wird,
- einem Schritt des Gewinnens, nach dem Schritt des Abkühlens unter Druckeinwirkung und vor dem Schritt des Verringerns oder Beseitigens, wobei das vernetzte und abgekühlte Kabel aufgefangen wird, indem es vorzugsweise auf eine Kabeltrommel gewickelt wird, und/oder
- einem Schritt des Nachbearbeitens, in welchem das erhaltene vernetzte Kabel auf herkömmliche Weise für seine spätere Verwendung nachbearbeitet wird.

8. Verfahren gemäß der Begriffsbestimmung in einem beliebigen der vorhergehenden Ansprüche, um ein vernetztes Kabel herzustellen, das mindestens eine Isolierschicht umfasst, **dadurch gekennzeichnet, dass** die mindestens eine Isolierschicht in Gegenwart des organischen Peroxids nach Formel (I) vernetzt wird.

9. Verfahren gemäß der Begriffsbestimmung in einem beliebigen der vorhergehenden Ansprüche, um ein vernetztes Kabel herzustellen, das mindestens eine halbleitende Schicht umfasst, **dadurch gekennzeichnet, dass** die mindestens eine halbleitende Schicht in Gegenwart des organischen Peroxids nach Formel (I) vernetzt wird.

10. Verfahren gemäß der Begriffsbestimmung in einem beliebigen der vorhergehenden Ansprüche, um ein vernetztes Kabel herzustellen, das eine Hüllschicht und möglicherweise eine oder mehrere Schichten umfasst, die aus einer Isolierschicht und einer halbleitenden Schicht ausgewählt sind, welche von der Hüllschicht umgeben sind, **dadurch gekennzeichnet, dass** zumindest die Hüllschicht in Gegenwart des organischen Peroxids nach Formel (I) vernetzt wird.

11. Verwendung eines organischen Peroxids nach Formel (I) gemäß der Begriffsbestimmung in Anspruch 1, um den Gehalt an flüchtigen Zersetzungsprodukten zu verringern oder zu beseitigen, wie sie während der Vernetzung eines Kabels entstehen, bei Raumtemperatur oder erhöhter Temperatur.

12. Verwendung eines organischen Peroxids nach Formel (I) gemäß dem Anspruch 11, **dadurch gekennzeichnet, dass** es sich bei dem organischen Peroxid um 2,5-Dimethyl-2,5-di-(tert.-butylperoxy)hexan handelt.

## Claims

1. Process for preparing a crosslinked cable, comprising the steps consisting of:
- applying on a conductor at least one layer comprising a polymer composition, and one or more organic peroxides, then
- crosslinking said layer to obtain a crosslinked cable, then
- cooling the obtained crosslinked cable under pressurized conditions, and then
- reducing or removing the content of volatile decomposition products(s) generated during crosslinking, at ambient or at elevated temperature, wherein
said process comprises one or both of the following features:
- said reduction or removal step is carried out in a more than 50% shorter period of time than the time period required for a reference cable that is a crosslinked and cooled cable having the same structure and layer material in each of said one or more layers, and prepared using the same process steps and conditions thereof, as well as the same degree of crosslinking, as said claimed crosslinked and cooled cable, but using a dicumyl peroxide as organic peroxide, in order for said reference cable to obtain the same content of said volatile decomposition product(s) as said claimed cable by using the same reduction or removal conditions as said claimed cable, or
- said reduction or removal step is carried out at a lower temperature than the temperature required for a reference cable that is a crosslinked and cooled cable having the same structure and layer material in each of said one or more layers, and prepared using the same process steps and conditions thereof, as well as the same degree of crosslinking, as said claimed crosslinked and cooled cable, but using a dicumyl peroxide as organic peroxide, in order for said reference cable to obtain the same content of said volatile decomposition product(s) as said claimed cable, and
wherein said organic peroxide is of formula (I): 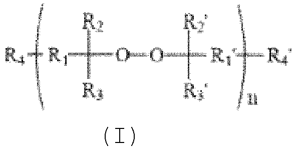 where:
- n is an integer equal to 1, 2, 3 or 4,
- R1, R1' are each independently an oxygen atom, linear or branched, saturated or partially unsaturated C1-C5 hydrocarbyl chain, and preferably a substituted linear C1-C5 alkyl chain,
- R2, R2', R3, R3' are each independently a linear or branched, saturated or partially unsaturated C1-C5 hydrocarbyl group, and preferably an unsubstituted linear C1-C5 alkyl group, and
- R4, R4' are each independently H, linear or branched, saturated or partially unsaturated C1-C5 hydrocarbyl group, and preferably an unsubstituted linear C1-C5 alkyl group.

2. Process according to Claim 1, **characterized in that** in said organic peroxide:
- R1, R1' are a hydrocarbyl chain of formula
(CH2)- or -(CH2-CH2)-,
- R2, R2', R3, R3', are each independently methyl, ethyl, 1-propyl, isopropyl, 1-butyl, isobutyl or tert-butyl, preferably methyl, and
- R4, R4' are each independently H or methyl, ethyl, 1-propyl, isopropyl, 1-butyl, isobutyl or tert-butyl, preferably H.

3. Process according to Claim 1, **characterized in that** said organic peroxide is 2,5-dimethyl-2,5-di-(tert-butylperoxy)hexane, di-tert-amyl peroxide, or di-tert-butyl peroxide, preferably 2,5-dimethyl-2,5-di-(tert-butylperoxy) hexane.

4. Process according to Claim 1, **characterized in that** in said organic peroxide:
- n is equal to 1, and
- R4, R4' together form a carbocyclic ring moiety of 3 to 14 carbon atoms optionally containing 1 to 4 heteroatoms selected from O, N, P, S or Si.

5. Process according to Claim 4, **characterized in that** said organic peroxide is 3,6,9-triethyl-3,6,9-trimethy1-1,4,7-triperoxonane.

6. Process as defined in any one of the preceding claims, **characterized in that** said reduction or removal step is carried out in a more than 70%, preferably in a more than 90%, shorter period of time than the reduction or removal step of the crosslinked and cooled reference cable as defined in Claim 1.

7. Process of any one of the preceding claims, **characterized in that** the crosslinked and cooled cable is further subjected to one or more steps selected from:
- a non-pressurized cooling step, wherein the crosslinked and cooled cable is further cooled in a cooling medium,
- a recovering step after the pressurized cooling step and before the reduction or removal step, wherein the crosslinked and cooled cable is collected, preferably wound to a cable drum, and/or
- a finishing step, wherein the obtained crosslinked cable is finished in a conventional manner for further use.

8. Process as defined in any one of the preceding claims for preparing a crosslinked cable that comprises at least one insulation layer, **characterized in that** said at least one insulation layer is crosslinked in the presence of said organic peroxide of formula (I).

9. Process as defined in any one of the preceding claims for preparing a crosslinked cable that comprises at least one semiconductive layer, **characterized in that** said at least one semiconductive layer is crosslinked in the presence of said organic peroxide of formula (I).

10. Process as defined in any one of the preceding claims for preparing a crosslinked cable that comprises a jacketing layer and optionally one or more layers selected from an insulation layer and a semiconductive layer surrounded by said jacketing layer, **characterized in that** at least said jacketing layer is crosslinked in the presence of said organic peroxide of formula (I).

11. Use of an organic peroxide of formula (I) as defined in Claim 1 for reducing or removing the content of volatile decomposition products(s) generated during crosslinking of a cable, at ambient or at elevated temperature.

12. Use of an organic peroxide of formula (I) according to Claim 11, **characterized in that** said organic peroxide is 2,5-dimethyl-2,5-di-(tert-butylperoxy)hexane.
